(19) Europäisches Patentamt
European Patent Office
Office européen des brevets

(11) Veröffentlichungsnummer : **0 231 841 B1**

# (12) EUROPÄISCHE PATENTSCHRIFT

(45) Veröffentlichungstag der Patentschrift :
09.01.91 Patentblatt 91/02

(51) Int. Cl.⁵ : **B01D 3/00, F28F 25/04**

(21) Anmeldenummer : 87100984.1

(22) Anmeldetag : 24.01.87

(54) **Vorrichtung zur gleichmässigen Verteilung einer Feststoffteilchen enthaltenden Flüssigkeit auf eine Querschnittfläche.**

(30) Priorität : 07.02.86 CH 505/86

(43) Veröffentlichungstag der Anmeldung :
12.08.87 Patentblatt 87/33

(45) Bekanntmachung des Hinweises auf die Patenterteilung :
09.01.91 Patentblatt 91/02

(84) Benannte Vertragsstaaten :
BE CH DE ES FR GB IT LI NL SE

(56) Entgegenhaltungen :
DE-A- 1 519 711
FR-A- 1 386 263

(73) Patentinhaber : GEBRÜDER SULZER AKTIENGESELLSCHAFT
Zürcherstrasse 9
CH-8401 Winterthur (CH)

(72) Erfinder : Bieri, Robert
Herzogenmühlestrasse 12
CH-8051 Zürich (CH)

(74) Vertreter : Sparing Röhl Henseler
Patentanwälte European Patent Attorneys
Rethelstrasse 123
D-4000 Düsseldorf 1 (DE)

**Beschreibung**

Die Erfindung betrifft einen Verteiler für eine Feststoffteilchen enthaltende Flüssigkeit mit wenigstens einem mit einer Aufgabeeinrichtung in Verbindung stehenden Verteilkanal, der einen sich vom Aufgabeende her verkleinernden Strömungsquerschnitt sowie seitliche Austrittsöffnungen und in die Strömung gestellte Leitflächen aufweist. Flüssigkeitsverteiler dienen bekanntlich dazu, eine kontinuierlich anfallende Flüssigkeitsmenge auf eine Querschnittsfläche in zahlreichen, meist gleichgroßen Mengenströmen zu verteilen.

Derartige Flüssigkeitsverteiler werden auf verschiedenen Gebieten verwendet. Ein besonderes Anwendungsgebiet bilden Austausch- und Reaktionskolonnen, in welchen mehrere Stoffströme, z.B ein Gas- und ein Flüssigkeitsstrom miteinander im Gleich- oder Gegenstrom in Kontakt gebracht werden. Hierbei kommt es unter anderem darauf an, daß Flüssigkeitsverteiler in einem großen Belastungsbereich eingesetzt werden können, und speziell bei Gegenstromkolonnen mit einer Gasphase, daß ein großer freier Querschnitt für das durchströmende Gas gewährleistet ist.

In derartigen Kolonnen und allgemein in der chemischen Verfahrenstechnik ist es üblich, Flüssigkeitsverteiler zu verwenden, bei welchen die Flüssigkeit über Siebböden oder Wehre verteilt wird oder durch Öffnungen unter dem Flüssigkeitsspiegel, wobei die Austrittsgeschwindigkeit in Abhängigkeit von der Stauhöhe entsprechend dem Torricellischen Theorem

$$w = \sqrt{2gh}$$

gegeben ist, wobei w die Ablaufgeschwindigkeit, g die Fallbeschleunigung und h die Stauhöhe ist.

Da die zu verteilenden Flüssigkeiten häufig suspendierte feste Verschmutzungen oder aber z.B. einen suspendierten Katalysator enthalten, hat es sich bei den bekannten Flüssigkeitsverteilern gezeigt, daß ihre Austrittsöffnungen innerhalb kurzer Zeit verstopft werden und somit mit diesen Verteilern kein kontinuierlicher einwandfreier Betrieb mehr möglich ist.

Aus der DE-A 1 519 711 ist eine Einlaß- und Verteilervorrichtung für ein Flüssigkeits-Dampfgemisch bekannt, die derart ausgebildet sein soll, daß das mit hoher Geschwindigkeit in eine Säule, z.B. eine Destillationskolonne eingeleitete Gemisch abgebremst und in seine Dampf- und Flüssigkeitskomponenten getrennt werden soll.

Hierbei ragen Leitflächen in einen konisch sich verjüngenden Verteilkanal hinein, wobei infolge des mit hoher Geschwindigkeit eingeführten Gemisches eine stark turbulente Strömung vorhanden ist und die Flüssigkeit von der Säulenwand abgefangen werden muß. Die Flüssigkeitsphase vereinigt sich zu einem kontinuierlichen Strom. Eine gleichmäßige Strömungsgeschwindigkeit unter Gravitationskrafteinwirkung und damit eine genau definierte und dosierte Aufteilung der Flüssigkeit kann nicht erzielt werden, ein V-förmig sich verengender Verteilkanal läßt dies nicht zu.

Demgegenüber liegt der Erfindung die Ausbildung eines Verteilers zugrunde, der auch bei einer, suspendierte Feststoffe enthaltenden Flüssigkeit einen einwandfreien Betrieb ermöglicht, und der außerdem eine geringe Bauhöhe besitzt, sowie einen großen freien Querschnitt aufweist.

Diese Aufgabe wird dadurch gelöst, daß die Leitflächen die parallel zur Strömungsrichtung angeordneten Wände 1 des Verteilkanals bilden, die den Verteilkanal stufenweise verengend und so die schlitzartigen Austrittsöffnungen 2 ausbildend angeordnet sind, wobei außenseitig an dem Verteilkanal Umlenkeinrichtungen 3, 4 zum Umlenken der austretenden Flüssigkeit in vertikaler Richtung benachbart zu den Austrittsöffnungen 2 angeordnet sind.

Der Verteilkanal kann gegenüber der Horizontalen eine Neigung vorzugsweise von 5 bis 10°, aufweisen ein U-Profil besitzen. Die Austrittsöffnungen können symmetrisch oder gegeneinander versetzt bezüglich der Längsachse des Verteilkanals angeordnet sein.

Gemäß Anspruch 13 soll der Verteiler bei Stoffaustauschkolonnen, insbesondere Absorptions- und Reaktionskolonnen vorteilhaft Anwendung finden.

Wenn es auch bei Flüssigkeitsverteilern mit einem relativ kleinen Verteilflächenbereich möglich ist, nur einen Verteilkanal vorzusehen, so werden in den meisten Fällen mehrere Verteilkanäle erforderlich sein, um den ganzen Flächenbereich gleichmäßig mit Flüssigkeit zu beaufschlagen.

Dadurch, daß bei der Erfindung die vorgegebene Geschwindigkeit über den gesamten Verteilquerschnitt oder mit anderen Worten über die gesamte Länge der Verteilquerschnitte aufrechterhalten wird, können sich keine Feststoffteilchen im Verteiler absetzen und den Querschnitt des Kanals verkleinern oder insbesondere die Austrittsöffnungen verstopfen.

Die Erfindung wird im folgenden anhand von in den beigefügten Abbildungen dargestellten Ausführungsbeispielen erläutert.

Fig. 1 zeigt im Grundriß einen Teil eines Verteilkanals.

Fig. 2 zeigt den Verteilkanal von Fig.1 perspektivisch.

Fig. 3 zeigt perspektivisch einen Teil einer geänderten Ausführungsform eines Verteilkanals.

Fig. 4 zeigt einen Teilausschnitt eines weiteren Verteilkanals.

Fig. 5a und 5b bzw. Fig. 6a und 6b zeigen je im Grundriß und im Teillängsschnitt zwei verschiedene Ausführungsformen eines Flüssigkeitsverteilers.

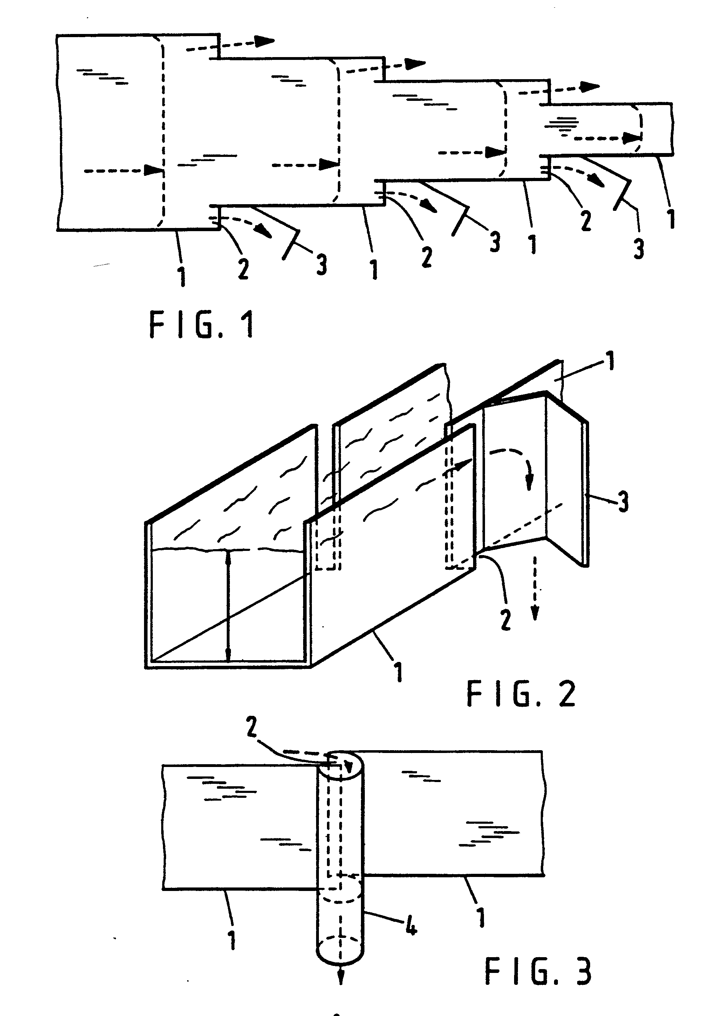

Der Verteilkanal gemäß den Fig. 1 und 2 ist in seiner Längsrichtung durch Leitbleche 1, von welchen nur sechs dargestellt sind, unterteilt und zwar derart, daß sich sein Strömungsquerschnitt nach jeder Austrittsöffnung verkleinert. Auf diese Weise bleibt das Strömungsprofil, wie in Fig. 1 gestrichelt angegeben ist, erhalten und damit die Strömungsgeschwindigkeit. Somit treten aus den schlitzartigen Austrittsöffnungen 2, die gleichzeitig als Dosiervorrichtungen dienen, gleichgrosse Flüssigkeitsmengen aus. Die Flüssigkeitsmengen werden so längs eines Verteilkanals quasi "abgeschält".

Hinter den Austrittsöffnungen 2 sind an den Leitblechen 1, die gleichzeitig Teile der Kanalwand bilden, auf beiden gegenüberliegenden Seiten (in Fig. 1 und 2 nur auf einer Seite dargestellt) Umlenkeinrichtungen für die Flüssigkeitsstrahlen angeordnet. Diese Umlenkeinrichtungen sind im Ausführungsbeispiel als Winkelbleche 3 ausgebildet. Sie bewirken eine vertikale Umlenkung der Flüssigkeitsteilmengen nach unten.

In Fig. 3 ist eine andere Ausführungsform einer Umlenkeinrichtung dargestellt. Diese besteht in einem, über einen Teil seiner Länge aufgeschnittenen Rohr 4. In seinem oberen Bereich wirkt das Rohr als Prallfläche für die Flüssigkeit und in seinem unteren Bereich als Ableiteinrichtung.

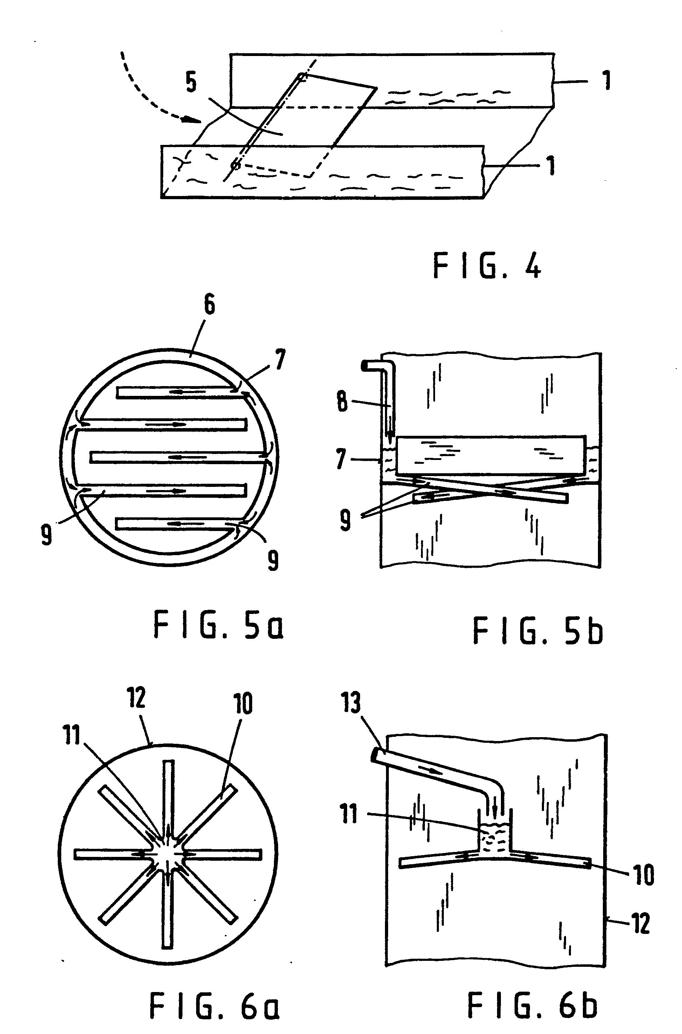

Zur "Glättung" der von einer Aufgabevorrichtung in einen Verteilkanal turbulent einströmenden Flüssigkeit, ist es vorteilhaft, im Bereich der Flüssigkeitsaufgabe im Verteilkanal 1 ein Dämpfungsblech 5 anzubringen, das im Hinblick auf eine variable Flüssigkeitsmenge als bewegliche Klappe mit abgestimmtem Gewicht ausgebildet sein kann (Fig. 4).

Es ist auch möglich zur Beruhigung der aufgegebenen Strömung auf dem Boden eines Verteilkanals Schwellen anzubringen.

Wie bereits erwähnt, wird es in der Mehrzahl der Anwendungsfälle erforderlich sein, mehrere Verteilkanäle über der Verteilfläche anzuordnen. In den Fig. 5a, 5b und 6a, 6b sind hierfür zwei variante Ausführsformen dargestellt.

Bei einer Ausführungsform gemäss den Fig. 5a und 5b ist die Aufgabeeinrichtung als ein Ringraum 6 in einer Kolonne 7 ausgebildet, dem über ein Zulaufrohr 8 die zu verteilende Flüssigkeit zugeführt wird. An den Ringraum 6 sind Verteilkanäle 9 mit einer Neigung angeschlossen.

Bei der in den Fig. 6a und 6b dargestellten Ausführungsform sind die Verteilrohre 10 strahlenförmig um eine zentral angeordnete, rohrartige Aufgabeeinrichtung 11 angeordnet und weisen dieser gegenüber ebenfalls eine Neigung radial nach aussen auf. In den in einer Kolonne 12 angeordneten Flüssigkeitsverteiler wird Flüssigkeit über ein Zulaufrohr 13 eingeleitet.

Der erfindungsgemässe Flüssigkeitsverteiler eignet sich nicht nur für Stoffaustauschkolonnen, sondern kann z B. auch in offenen Systemen, z.B. bei industrieller Abwasserreinigung, auf dem Gebiet der Nassmetallurgie oder bei Aufbereitung von Mineralien, z.B. Tonerde und dgl. eingesetzt werden.

## Ansprüche

1. Verteiler für eine Feststoffteilchen enthaltende Flüssigkeit mit wenigstens einem mit einer Aufgabeeinrichtung in Verbindung stehenden Verteilkanal, der einen sich vom Aufgabeende her verkleinernden Strömungsquerschnitt sowie seitliche Austrittsöffnungen (2) und in die Strömung gestellte Leitflächen aufweist, dadurch gekennzeichnet, daß die Leitflächen die parallel zur Strömungsrichtung angeordneten Wände (1) des Verteilkanals bilden, die den Verteilkanal stufenweise verengend und so die schlitzartigen Austrittsöffnungen (2) ausbildend angeordnet sind, wobei außenseitig an dem Verteilkanal Umlenkeinrichtungen (3, 4) zum Umlenken der austretenden Flüssigkeit in vertikaler Richtung benachbart zu den Austrittsöffnungen (2) angeordnet sind.

2. Vorrichtung nach Anspruch 1, dadurch gekennzeichnet, daß der Verteilkanal gegenüber der Horizontalen eine Neigung aufweist.

3. Vorrichtung nach Anspruch 2, dadurch gekennzeichnet, daß der Neigungswinkel im Bereich von 5 bis 10° liegt.

4. Vorrichtung nach Anspruch 1, dadurch gekennzeichnet, daß der Verteilkanal ein U-Profil aufweist.

5. Vorrichtung nach Anspruch 1, dadurch gekennzeichnet, daß die Austrittsöffnungen (2) symmetrisch bezüglich der Längsachse des Verteilkanals angeordnet sind.

6. Vorrichtung nach Anspruch 1, dadurch gekennzeichnet, daß die Austrittsöffnungen (2) auf beiden Seiten des Verteilkanals gegeneinander versetzt angeordnet sind.

7. Vorrichtung nach Anspruch 1, dadurch gekennzeichnet, daß die Umlenkeinrichtungen (3) als Winkelbleche ausgebildet sind.

8. Vorrichtung nach Anspruch 1, dadurch gekennzeichnet, daß die Umlenkeinrichtungen (4) als ein teilweise längs aufgeschnittenes Rohr ausgebildet sind.

9. Vorrichtung nach Anspruch 1, dadurch gekennzeichnet, daß im Verteilkanal zwischen dessen Wänden (1) Dämpfungsbleche (5) angeordnet sind.

10. Vorrichtung nach Anspruch 1, dadurch gekennzeichnet, daß auf dem Boden des Verteilkanals abstandsweise Schwellen angeordnet sind.

11. Vorrichtung nach Anspruch 1, dadurch gekennzeichnet, daß bei mehreren Verteilkanälen (9) eine ringförmig ausgebildete Aufgabeeinrichtung (6) vorgesehen ist, und die einen Enden der Verteilkanäle (9) alternierend mit den gegenüberliegenden Seiten des Ringraumes verbunden sind.

12. Vorrichtung nach Anspruch 2, dadurch gekennzeichnet, daß bei mehreren Verteilkanälen (10) diese strahlenartig um eine zentral angeordnete Aufgabeeinrichtung (11) angeordnet sind.

13. Vorrichtung nach Anspruch 1, gekennzeichnet durch die Verwendung als Flüssigkeitsverteiler in Stoffaustauschkolonnen, insbesondere Absorptions-, Destillations- oder Reaktionskolonnen.

## Claims

1. A distributor for a liquid containing solid particles, the distributor having at least one distribution duct connected to a feed device and having a flow cross-section which tapers from the feed end and lateral outlet openings (2) and baffle surfaces disposed in the flow, characterised in that the baffle surfaces form the walls (1) of the distribution duct, which are disposed parallel to the direction of flow, and narrow the distribution duct in stepwise manner and thus form the outlet openings (2) or slots, guide devices (3, 4) for guiding the outflowing liquid in the vertical direction being disposed on the outside of the distribution duct and adjacent the outlet openings (2).

2. A device according to claim 1, characterised in that the distribution duct is inclined to the horizontal.

3. A device according to claim 2, characterised in that the angle of inclination is in the range from 5 to 10°.

4. A device according to claim 1, characterised in that the distribution duct has a U cross-section.

5. A device according to claim 1, characterised in that the outlet openings (2) are disposed symmetrically relative to the longitudinal axis of the distribution duct.

6. A device according to claim 1, characterised in that the outlet openings (2) are offset from one another on the two sides of the distribution duct.

7. A device according to claim 1, characterised in that the guide devices (3) are angle plates.

8. A device according to claim 1, characterised in that the guide devices (4) are in the form of a tube slit along part of its length.

9. A device according to claim 1, characterised in that damping plates (5) are disposed between the walls (1) of the distribution duct.

10. A device according to claim 1, characterised in that spaced-apart barriers are disposed on the base of the distribution duct.

11. A device according to claim 1, characterised in that where there are a number of distribution ducts (9) an annular feed device (6) is provided and the distribution ducts (9) are alternately connected at one end to opposite sides of the annular space.

12. A device according to claim 2, characterised in that where there are a number of distribution ducts (10) they are disposed so as to radiate from a central feed opening (11).

13. A device according to claim 1, characterised by use as a liquid distributor in mass-transfer columns, more part particularly absorption, distillation or reaction columns.

## Revendications

1. Répartiteur de liquide chargé de particules solides, comprenant au moins un canal de distribution, en communication avec un dispositif d'alimentation, qui présente une section d'écoulement se rétrécissant depuis l'extrémité d'alimentation ainsi que des orifices latéraux de sortie (2) et des surfaces directrices en place dans le courant, caractérisé en ce que les surfaces directrices forment les parois (1) du canal de répartition, disposées parallèlement à la direction d'écoulement, qui sont agencées de manière à rétrécir progressivement le canal de répartition et à constituer ainsi les ouvertures de sortie (2) en forme de fentes, des déflecteurs (3, 4) étant disposés du côté extérieur sur le canal de répartition afin de détourner le liquide sortant en direction verticale au voisinage des ouvertures de sortie (2).

2. Dispositif suivant la revendication 1, caractérisé en ce que le canal de répartition présente une inclinaison par rapport à l'horizontale.

3. Dispositif suivant la revendication 2, caractérisé en ce que l'angle d'inclinaison est compris dans la plage de 5 à 10°.

4. Dispositif suivant la revendication 1, caractérisé en ce que le canal de répartition présente un profil en U.

5. Dispositif suivant la revendication 1, caractérisé en ce que les orifices de sortie (2) sont disposés symétriquement par rapport à l'axe longitudinal du canal de répartition.

6. Dispositif suivant la revendication 1, caractérisé en ce que les orifices de sortie (2) sont disposés avec un décalage l'un par rapport à l'autre des deux côtés du canal de répartition.

7. Dispositif suivant la revendication 1, caractérisé en ce que les déflecteurs (3) sont réalisés comme tôles coudées.

8. Dispositif suivant la revendication 1, caractérisé en ce que les déflecteurs (4) sont réalisés comme tube partiellement découpé dans la direction longitudinale.

9. Dispositif suivant la revendication 1, caractérisé en ce que des tôles d'amortissement (5) sont mises en place dans le canal de répartition entre ses parois (1).

10. Dispositif suivant la revendication 1, caractérisé en ce que des traverses espacées sont disposées au fond du canal de répartition.

11. Dispositif suivant la revendication 1, caractérisé en ce que, lorsqu'il y a plusieurs canaux de répartition (9), un dispositif d'alimentation (6) de configuration annulaire est prévu et les extrémités d'un côté des canaux de répartition (9) sont reliées en alternance avec les côtés opposés de l'espace annulaire.

12. Dispositif suivant la revendication 2, caractérisé en ce que, lorsqu'il y a plusieurs canaux de répartition (10), ces canaux sont répartis radialement autour d'un dispositif d'alimentation (11) occupant une position centrale.

13. Dispositif suivant la revendication 1, caractérisé par son utilisation comme répartiteur de liquide dans des colonnes d'échange de matières, notamment des colonnes d'absorption, de distillation ou de réaction.

FIG. 1

FIG. 2

FIG. 3

FIG. 4

FIG. 5a

FIG. 5b

FIG. 6a

FIG. 6b